# EUROPÄISCHE PATENTANMELDUNG

(11) **EP 4 155 094 A1**
(43) Veröffentlichungstag der Anmeldung: **29.03.2023**
(21) Anmeldenummer: 22197308.4
(22) Anmeldetag: 23.09.2022
(51) Int. Cl.: B60B 5/02, B60B 9/04, B60B 9/26

(54) **FEDERUNG**

(30) Priorität: 24.09.2021 DE 102021124800
(71) Anmelder: Emmaljunga Holding AB, 28268 Vittsjö (SE)
(72) Erfinder: Wedin, Erik, 28267 Vittsjö (SE); Bost, Bart Willem Jozef, 6213HD Maastricht (NL)
(74) Vertreter: Müller Schupfner & Partner Patent- und Rechtsanwaltspartnerschaft mbB

(57) **Zusammenfassung**

Betrifft eine Federung, insbesondere eines Rades, aufweisend einen Nabenabschnitt und einen Randabschnitt, wobei der Nabenabschnitt einen Lagerabschnitt zur drehbaren Lagerung um eine Rotationsachse an einer Achseinheit aufweist, wobei der Randabschnitt im Wesentlichen ringförmig um die Rotationsachse ausgebildet ist und den Nabenabschnitt umgibt, wobei zwischen dem Nabenabschnitt und dem Randabschnitt zumindest zwei Federabschnitte angeordnet sind, von denen jeder am Nabenabschnitt und am Randabschnitt angreift, wobei die Federabschnitte jeweils einen Federsteg aus elastisch verformbarem Material aufweisen, wobei der Federsteg sich überwiegend nicht senkrecht orthogonal zur Rotationsachse erstreckt.

## Beschreibung

Die vorliegende Erfindung betrifft eine Federung, insbesondere zum Einsatz in einem Transportfahrzeug.

Federungssysteme für Transportfahrzeuge sind im Stand der Technik bekannt. Üblicherweise wird dabei die drehbare Lagerung eines Rades relativ zum Rahmen des Fahrzeuges durch elastische Elemente abgefedert. Auch für den Einsatz in Kindertransportfahrzeugen haben sich solche Federungssysteme, bei denen jeweils die drehbare Lagerung des Rades relativ zum Rahmen elastisch abgefedert wird, durchgesetzt. Die Herstellungskosten solcher Radaufhängungen mit Federungen sind dabei hoch, was nicht zuletzt aus einer aufwändigen Montage der entsprechenden Radaufhängungen resultiert.

Aufgabe der vorliegenden Erfindung ist es, eine Federung bereitzustellen, welche besonders einfach herzustellen ist und welche ein geringeres Gesamtgewicht aufweist.

Diese Aufgabe wird gelöst mit einer Federung gemäß Anspruch 1. Weitere Vorteile und Merkmale der vorliegenden Erfindung ergeben sich aus den abhängigen Ansprüchen.

Erfindungsgemäß ist eine Federung, insbesondere eines Rades, vorgesehen, welche einen Nabenabschnitt und einen Randabschnitt aufweist, wobei der Nabenabschnitt einen Lagerabschnitt zur drehbaren Lagerung um eine Rotationsachse an einer Achseinheit aufweist, wobei der Randabschnitt im Wesentlichen ringförmig um die Rotationsachse ausgebildet ist und den Nabenabschnitt umgibt, wobei zwischen dem Nabenabschnitt und dem Randabschnitt zumindest zwei Federabschnitte angeordnet sind, von denen jeder am Nabenabschnitt und am Randabschnitt angreift, wobei die Federabschnitte jeweils einen Federsteg aus elastisch verformbarem Material aufweisen, wobei der Federsteg sich überwiegend nicht senkrecht zur Rotationsachse erstreckt. Die hier beschriebene Federung ist somit im Wesentlichen eine in ein Fahrzeugrad integrierte Federung, welche im Gegensatz zu den aus dem Stand der Technik bekannten Federungssystemen den Bereich der Radnabe relativ zur Lauffläche des Rades auf seiner Außenseite abfedert. Anstelle der sonst häufig zwischen der Radnabe und dem Felgenrand vorgesehenen Speichen, sind im Rahmen der vorliegenden Erfindung zumindest zwei Federabschnitte vorgesehen welche den Randabschnitts gegenüber der Nabe, also dem Nabenabschnitt, lagern und abfedern. Die Federabschnitte sind dabei insbesondere dafür ausgelegt, einen besonders großen Federweg zu ermöglichen, was eine komfortable Abfederung des Nabenabschnitt des relativ zum Randabschnitt erlaubt. Mit anderen Worten weisen die Federabschnitte eine geringere Federkonstante auf als die üblicherweise zwischen einer Felge und einer Nabe angeordneten Speichen oder Felgenstreben. Im Nabenabschnitt ist die Federung vorzugsweise drehbar um eine Rotationsachse an einer Achseinheit, insbesondere einer starren Achse eines Kindertransportfahrzeuges, lagerbar. Jeder der Federabschnitte weist zumindest einen Federsteg auf, wobei sich der Federsteg überwiegend nicht senkrecht zur Rotationsachse, also überwiegend nichtparallel zu einer radial nach außen weisenden Richtung, erstreckt. Hierdurch wird erreicht, dass zur Abfederung von Relativbewegungen zwischen dem Randabschnitt und dem Nabenabschnitt keine längs der Haupterstreckung der Federstege erfolgende Verformung, welche eine Zug- oder Druckverformung der Federstege darstellen würde, stattfindet, sondern eine als Biegeverformung der Federstege, quer zu deren Haupterstreckungsrichtung, erfolgende Verformung. Es können auf diese Weise bei verhältnismäßig geringer Materialbeanspruchung der Federstege große Federwege erreicht werden, wobei durch die quer zur Erstreckungsrichtung der Federstege erfolgenden Biegeverformung Federkräfte mit einem moderaten progressiven Anstieg der Federkonstante erzeugt werden können.

Bevorzugt weisen die Federabschnitte eine Federaussparung auf, wobei der Federsteg die Federaussparung in einer orthogonal zur Rotationsachse stehenden Federebene vollständig umgibt. Bei dieser bevorzugten Ausführungsform sind die Federabschnitte somit als geschlossene Gebilde ausgeführt, welche an ihrer Innenseite jeweils eine Federaussparung aufweisen. Die, die Federaussparung umgebenden Bereiche der Federabschnitte sind dabei die Federstege, welche vorzugsweise eine im Wesentlichen konstante Wandstärke aufweisen.

In einer alternativen Ausführungsform können die Federstege auch einen veränderlichen Wandstärkenverlauf aufweisen, wodurch sich insbesondere die Kennlinie der Federkonstante des jeweiligen Federabschnitts einstellen lässt. So kann es bevorzugt sein, dass die Federstege in einem radial außen liegenden Bereich eine dünnere Wandstärke aufweisen als in einem radial weiter innen liegenden Bereich. Auf diese Weise kann bei kleineren Bodenunebenheiten die Federung hochfrequente Schwingungen mit geringer Amplitude mit einer in diesem Bereich geringeren Federsteifigkeit leichter ausgleichen und bei diesen Verhältnissen für hohen Komfort sorgen. Gleichzeitig kann bei größeren Bodenunebenheiten, welche Auslenkungen mit größerer Amplitude erzeugen, der radial innenliegende Bereich des Federabschnitts diese Unebenheiten mit größerer Federkonstante abfedern und ausgleichen um ein Einschwingen des Kindertransportfahrzeuges zu verhindern.

In einer bevorzugten Ausführungsform ist der Federsteg einstückig mit dem Material des Nabenabschnitts und/oder mit dem Material des Randabschnitts ausgebildet. Die einstückige Ausbildung des Federsteges und damit des Federabschnittes mit dem Nabenabschnitt und/oder dem Randabschnitt sorgt für eine besonders einfache Herstellbarkeit der Federung. Außerdem kann durch die einstückige Ausführung des Federabschnittes mit dem Nabenabschnitt und bevorzugt auch dem Randabschnitt hohe Festigkeitswerte erreichen, da keine Materialschnittstellen wie Klebeverbindungen, Schweißverbindung oder form- bzw. kraftschlüssige Verbindungen zwischen dem Federabschnitt und dem Nabenabschnitt bzw. dem Randabschnitt erforderlich sind. Mit Vorteil kann somit ein gesamtes Fahrzeugrad, in welches die Federung integriert ist, in einem einzigen Verfahrensschritt hergestellt werden. Hierfür bietet sich insbesondere ein Gussverfahren, wie beispielsweise ein Spritzgussverfahren an.

Alternativ bevorzugt ist zumindest einer der Federstege mit dem Material des Nabenabschnitts und/oder des Randabschnitts stoffschlüssig verbunden ist und insbesondere bevorzugt angegossen. Alternativ zur einstückigen Ausführung des Federabschnittes mit dem Randabschnitt und/oder dem Nabenabschnitt, kann der Federabschnitte auch an zumindest einem dieser Abschnitte durch eine stoffschlüssige Verbindung festgelegt sein. Dies erhöht im Herstellungsprozess die Flexibilität der Auslegung der Federung und kann es beispielsweise ermöglichen an ein- und demselben Radnabentyp verschiedene Federabschnitte mit entsprechend verschieden großen Randabschnitten festzulegen. Der Verbund aus Nabenabschnitt, Federabschnitte und Randabschnitt kann bevorzugt aus Kunststoff wie TPU oder TPA hergestellt sein.

Ferner bevorzugt weisen die Federabschnitte entlang ihrer Erstreckung parallel zur Rotationsachse einen im Wesentlichen gleichbleibenden Querschnitt auf. Mit anderen Worten sind somit die Federstege mit einer Wandstärke vorgesehen, welche sich in einer parallel zur Rotationsachse verlaufenden Richtung im Wesentlichen nicht ändert, wobei hierbei eine leichte Entformungsschräge vorgesehen sein kann. Dieses Merkmal erleichtert die Herstellung der Federung, da eine entsprechende Spritzgussform parallel zur Rotationsachse geöffnet werden kann, um das mit der Federung ausgestattete Fahrzeugrad zu entnehmen. Es versteht sich in diesem Zusammenhang, dass mit Vorteil auch die Federaussparung in einen entlang bzw. parallel zur Rotationsachse im Wesentlichen gleichbleibenden Querschnitt aufweisen. Als im Wesentlichen gleichbleibender Querschnitt wird im vorliegenden Zusammenhang auch ein Querschnitt definiert, welcher beispielsweise lokale Abrundungen aufweist, welche Spannungsspitzen vermeiden und welche fertigungsbedingte Abweichungen von der mathematisch perfekten, gleich bleibenden Querschnittsform darstellen. Außerdem umfasst dieses Merkmal auch eine sogenannte Entformungsschräge, also eine entlang der Rotationsachse vorgesehene Abnahme der der Dicke im Bereich von 1° bis 5°, welche das Öffnen der Gussform zusätzlich erleichtert. Entscheidend ist, dass die Federabschnitte keine parallel zur Rotationsachse wirkenden Hinterschneidungen aufweisen, welche die Herstellung komplizierter und teurer machen würde.

Vorzugsweise weisen die Federabschnitte eine ovale Form auf, wobei die in die Federebene projizierte Fläche der Federabschnitte jeweils elliptisch ist. In einer besonders bevorzugten Ausführungsform sind die Federabschnitte als geschlossene ovale Gebilde ausgeführt. Dabei beschreibt die Außenkante einer in die Federebene projizierten Abbildung der Federabschnitte jeweils eine Ellipse. Es hat sich gezeigt, dass eine ovale Form der Federabschnitte eine besonders gleichmäßige Abfederung des Radabschnittes relativ zum Nabenabschnitts auch bei einer Rotation des Rades und somit wechselnder Belastungsrichtung der Federabschnitte erreicht. In einer besonders bevorzugten Ausführung ist dabei in radialer Richtung jeweils nur ein Federabschnitte mit einer elliptischen Aussparung vorgesehen, was die Fertigung der Federung deutlich vereinfacht.

Alternativ zur ovalen Form der Federabschnitte kann auch eine Wabenform oder eine polygonale Form mit zumindest acht Ecken zum Einsatz kommen. Als weitere Querschnittsform der Federabschnitte kann auch eine kreisförmige Geometrie der Federabschnitte bevorzugt sein, wobei die Federstege im unbelasteten Zustand der Federung im Wesentlichen zylinderförmig ausgebildet sind. Die Kreisform wird insbesondere dafür eingesetzt, dass eine radial um die Federachse wirkende, härtere Federwirkung erzielt wird. Bevorzugt kann auch eine Kombination verschiedener Querschnittsgeometrien der Federabschnitte zum Einsatz gelangen, beispielsweise ovale und kreisförmige Federabschnitte, um eine bestimmte Federkennlinie einstellen zu können.

Dabei weist bevorzugt die Hauptachse der projizierten elliptischen Fläche eine Länge auf, die das 1,2- bis 3,5-fache, vorzugsweise das 1,5- bis 2,5-fache der Länge der Nebenachse beträgt. Das Verhältnis der Hauptachse der elliptischen Fläche des Federabschnittes zur Nebenachse wird vorzugsweise im unbelasteten Zustand der Federung, d. h. dem Zustand in dem keine Kraft auf den Randabschnitt oder den Nabenabschnitt wirkt derart das die Federabschnitte in einer Richtung verformt werden. Weiterhin werden die Hauptachse und die Nebenachse der elliptischen Form vorzugsweise an der Innenseite der Federstege gemessen. Mit anderen Worten bildet somit die Federaussparung die Referenzgeometrie für die Hauptachse und die Nebenachse der entsprechenden Ellipse.

Mit Vorteil beträgt die Länge der Hauptachse ein 20- bis 100-faches, vorzugsweise ein 30- bis 70-faches und besonders bevorzugt ein 40- bis 60-faches der geringsten Wanddicke, bzw. Wandstärke, des Federsteges. Das Verhältnis der Hauptachse zur Wandstärke des Federsteges ist insbesondere ein Ausdruck dafür wie dünnwandig der Federsteg ausgeführt werden kann im Verhältnis zur Dimension der Federaussparung. Es hat sich gezeigt, dass in einem Bereich des 20- bis 100-fachen Federungen für sämtliche Kindertransportfahrzeuge ausgelegt werden können. Für besonders sportlich und leichtbauende Kindertransportfahrzeuge hat sich der besonders bevorzugte Bereich von 40 bis 60 des Verhältnisses zwischen der Hauptachse und der Wandstärke des Federsteges bewährt.

Vorzugsweise weist die Federung drei Federabschnitte auf, welche in einem unbelasteten Zustand der Federung gleichmäßig und mit gleichem Abstand voneinander um die Rotationsachse verteilt angeordnet sind. Die Anordnung von drei Fehlerabschnitten sorgt für eine besonders gleichmäßige Abfederung beim Abrollen des Randabschnitten, welcher bevorzugt selbst oder mittelbar über einen auf dem Randabschnitt angeordneten Reifen die Außenfläche eines Fahrzeugrades aufweist.

Besonders bevorzugt sind zumindest vier Federabschnitte vorgesehen, welche in einem unbelasteten Zustand der Federung gleichmäßig und mit gleichem Abstand voneinander um die Rotationsachse verteilt angeordnet sind. Es hat sich im Rahmen der vorliegenden Erfindung bewährt, nicht mehr als vier Federabschnitte vorzusehen, da hierdurch das Gewicht der Federung und damit eines entsprechenden, gefederten Rades minimiert werden kann und gleichzeitig ein optimierter Federkomfort erreichbar ist.

Mit Vorteil ist zumindest ein Verstärkungselement vorgesehen, welches in einen Federabschnitt einsetzbar und durch den Federsteg formschlüssig gegen Verlagerung senkrecht zur Rotationsachse gesichert ist. Das Verstärkungselement dient mit Vorteil der Anpassung der Federung an ein höheres Gewicht des zu transportierenden Kindes oder Transportgutes. So wird es ermöglicht, solange das zu transportierenden und abzufedernde Gewicht gering ist, die Federung ohne Verstärkungselement eingesetzt wird. Sobald das zu transportierenden Gewicht eine Grenze von beispielsweise 15-25 Kilo überschreitet, kann ein Anwender das Verstärkungselement in die entsprechende Federaussparung einsetzen und somit die Federkonstante des Federabschnittes um einen festgelegten Wert erhöhen, was für dieses höhere Gewicht entsprechend den Federkomfort anpasst. Das Verstärkungselement kann dabei vorzugsweise aus demselben Material wie der Randabschnitt, der Federabschnitte, und/oder der Nabenabschnitt ausgebildet sein alternativ kann das Verstärkungselement auch als Metallring, mit korrespondierender ovaler Form vorgesehen sein, welcher eine entsprechende größere Steigerung der Federkonstante ermöglicht.

Weiterhin bevorzugt ist zumindest ein Klammerelement vorgesehen, welches das Verstärkungselement kraft- und/oder formschlüssig am Federsteg hält. Das Klammerelement ist insbesondere ein einfach einzusetzen des Halteelement, mit welchem das Verstärkungselement am Federabschnitte gehalten werden kann. Gleichzeitig wird das Verstärkungselement vorzugsweise auf der, dem Klammerelement gegenüberliegenden Seite des Federabschnittes an einem Haltevorsprung, welcher einstückig am Federabschnitte ausgebildet ist, gehalten. Dies ermöglicht es, das Verstärkungselement in den Federabschnitt bis zum Anschlag einzuschieben und anschließend in dieser Stellung durch ein oder mehrere Klammerelemente zu sichern.

Bevorzugt weist der Nabenabschnitt eine Eingriffsgeometrie auf, welche zum Eingriff mit einem Antriebs- und/oder Bremssystem ausgelegt ist, wobei die Eingriffsgeometrie einstückig mit dem Lagerabschnitt am Nabenabschnitt ausgebildet ist. Vorzugsweise kann auf diese Weise neben der Federung des Rades auch weitere Funktionsgeometrie einstückig an dem Nabenabschnitt ausgebildet sein. Dies erlaubt es, ein besonders multifunktional einsetzbares und gleichzeitig gefedertes Rad in einem Verfahrensschnitt herzustellen, wobei mit Vorteil keine oder nur eine sehr geringe Anzahl weiterer Anbauteile erforderlich ist um sämtliche Funktionen eines Kindertransportfahrzeugrades, wie Bremsen und gefedert Abrollen, zu verwirklichen.

Ferner bevorzugt weist der Lagerabschnitt eine einstückig mit dem Nabenabschnitt ausgeführte Aufnahme für einen Außenring eines Wälz- oder Gleitlagers auf. Vorzugsweise ist am Lageabschnitt eine entsprechende umlaufende Nut vorgesehen, welches selbst als Lageraußenringen fungiert oder in welche ein entsprechendes Wälz oder Gleitlager eingesetzt werden kann.

Bevorzugt ist ein Reifen auf einer radial außen liegenden Außenfläche des Randabschnitts mit dem Randabschnitt verbunden, wobei der Reifen bevorzugt auf die Außenfläche aufgegossen, geklebt, oder gemeinsam mit dem Randabschnitt in einem Zwei-Komponenten-Spritzgussverfahren hergestellt ist. Der Reifen ist vorzugsweise aus einem geschäumten Kunststoff hergestellt.

Weiterhin bevorzugt ist in einem Übergangsbereich zwischen dem Randabschnitt und dem Federabschnitt zumindest ein Dämpfabschnitt angeordnet und an dem Randabschnitt und/oder dem Federabschnitt festgelegt, wobei der Dämpfabschnitt aus demselben Material wie der Randabschnitt oder aus einem, bevorzugt koextrudierten, weicherem Material als der Randabschnitt ausgebildet ist. In einer ersten bevorzugten Ausführungsform kann der Dämpfabschnitt als Gummibauteil ausgelegt sein welches zwischen dem ansonsten aus Kunststoff hergestellten Randabschnitt und Federabschnitt angeordnet ist. Alternativ bevorzugt kann ein mit den übrigen Abschnitten ko-extrudiertes Material eingesetzt werden, welches eine lokale Verstärkung erreicht. Auf diese Weise können Spannungsspitzen im Anbindungsbereich zwischen dem Randabschnitt und dem Federabschnitt sowie auch zwischen dem Federabschnitt und dem Nabenabschnitt erreicht werden.

Weitere Vorteile und Merkmale der vorliegenden Erfindung ergeben sich aus der nachfolgenden Beschreibung mit Bezug auf die beigefügten Figuren.

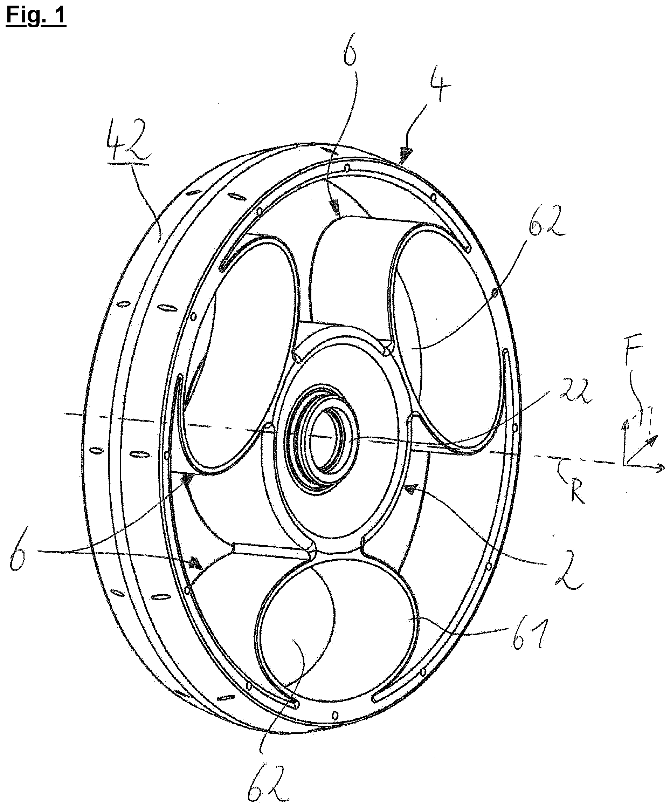

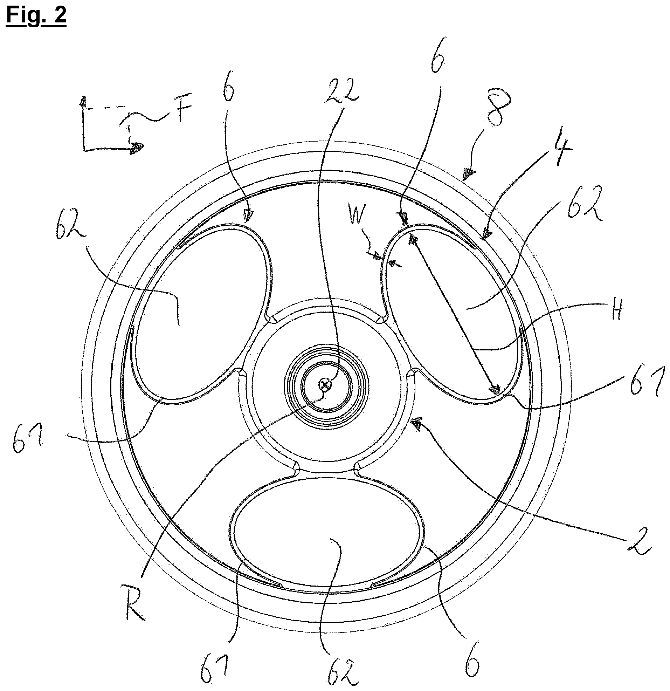

Figur 1 zeigt eine bevorzugte Ausführungsform der erfindungsgemäßen Federung bestehend aus einem Randabschnitt 4, drei Federabschnitten 6 und einem Nabenabschnitt 2. Die Federabschnitte 6 sind vorzugsweise als ovale Gebilde ausgeführt und weisen einen Federsteg 61 und jeweils eine Federaussparung 62 auf. Jeweils an den kurzen Enden der Federabschnitte 6 sind diese einstückig mit dem Nabenabschnitt 2 und mit dem Randabschnitt 4 verbunden. Mit anderen Worten erstreckt sich die Hauptachse H der elliptischen Form der Federabschnitte 6 (siehe fig. 2) somit im Wesentlichen tangential zur Umfangsrichtung um die Rotationsachse R. Die Außenfläche 42 des Randabschnitts 4 weist entsprechende Aussparungen auf, welche zum verbesserten Eingriff mit einem auf den Randabschnitt 4 aufgespritzt Reifen 8 vorgesehen sind. Mit Vorteil weisen dabei die Federabschnitte 6 einen senkrecht zur Federebene F und somit parallel zur Rotationsachse im wesentlichen gleichbleibenden Querschnitt auf. Bei der in Figur 1 gezeigten Ausführungsform sind die Federstege 61 ebenfalls mit einer im wesentlichen gleich bleibenden Wandstärke, entlang des Verlaufes zwischen dem Nabenabschnitt 2 und dem Randabschnitt 4 vorgesehen.

Figur 2 zeigt die in Figur 1 gezeigte bevorzugte Ausführungsform der Federung mit einem daran festgelegten Reifen 8. Der Reifen 8 ist vorzugsweise aus geschäumtem Kunststoff wie TPU oder aus Gummi hergestellt und stoffschlüssige, insbesondere durch Aufgießen oder Aufkleben an der Außenfläche 42 des Randabschnitts 4 festgelegt. Weiterhin ist die Wanddicke W eines der Federstege 61, beispielhaft für alle übrigen der in Figur 2 gezeigten Federstege 61, gezeigt welche im wesentlichen konstant ist. Bei der in Figur 2 gezeigten bevorzugten Ausführungsform steht dabei die Länge der Hauptachse H in einem Verhältnis von 40-50 zur Wandstärke W.

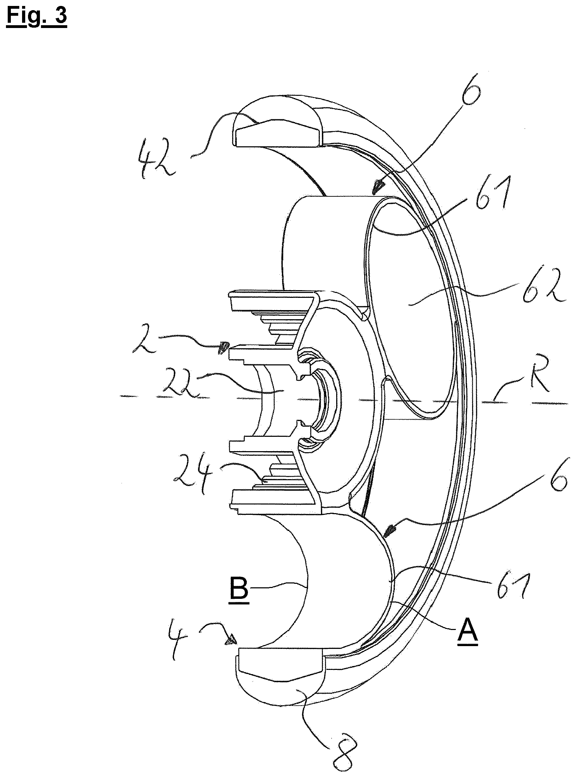

Figur 3 zeigt eine teilweise geschnittene Ansicht einer bevorzugten Ausführungsform der Federung. Dabei ist insbesondere das Innenleben des Naben Abschnitts 2 gezeigt welcher einen Lagerabschnitt 22 und eine Eingriffsgeometrie 24 aufweist. Der Lagerabschnitt 22 dient der um die Rotationsachse R drehbaren Lagerung der Federung und somit des gesamten Fahrzeugrades. Der Eingriffsabschnitt 24 dient der Aufnahme von Beschleunigung oder Bremskräften und ist insbesondere dafür ausgelegt mit der Bremse eines Kinderwagens in Eingriff gebracht zu werden. Die Federstege 61 weisen jeweils eine Frontfläche A und eine hintere Stirnfläche B auf, welche jeweils an den parallel zur Rotationsachse gegenüberliegenden Enden angeordnet sind. Bevorzugt ist dabei die Frontfläche A parallel zur Stirnfläche B ausgerichtet. In einer besonders bevorzugten Ausführungsform, stehen dabei die Fronfläche A und die hintere Stirnfläche B senkrecht zur Rotationsachse R.

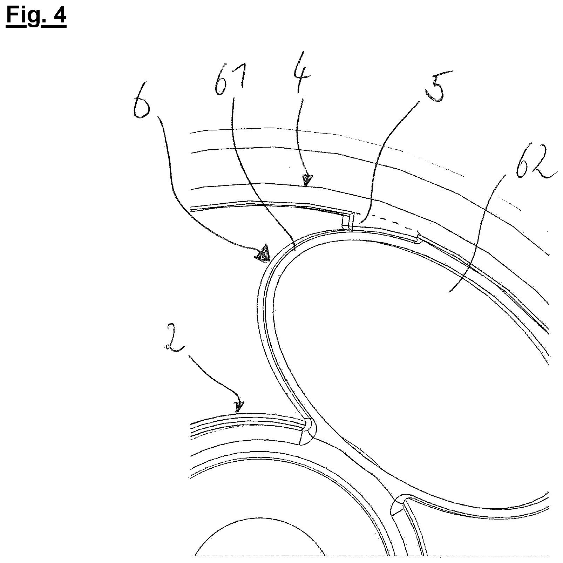

Figur 4 zeigt eine Teilansicht einer bevorzugten Ausführungsform einer erfindungsgemäßen Federung. Dabei ist im Übergangsbereich zwischen dem Randabschnitt 4 und dem Federabschnitt 6 ein Dämpfabschnitt 5 vorgesehen, welcher als lokale Materialverstärkung vorzugsweise aus dem Material des Randabschnitts 4 ausgebildet ist. Der Dämpfabschnitt 5 dient zur Vermeidung lokaler Spannungsspitzen und der zusätzlichen Dämpfung von Schwingungen. Es versteht sich, dass der Dämpfabschnitt 5 alternativ oder zusätzlich auch im Übergangsbereich zwischen dem Federabschnitt 6 und dem Nabenabschnitt 2 angeordnet sein kann um auch in diesem Bereich Spannungsspitzen zu vermeiden und für eine Dämpfung zu sorgen.

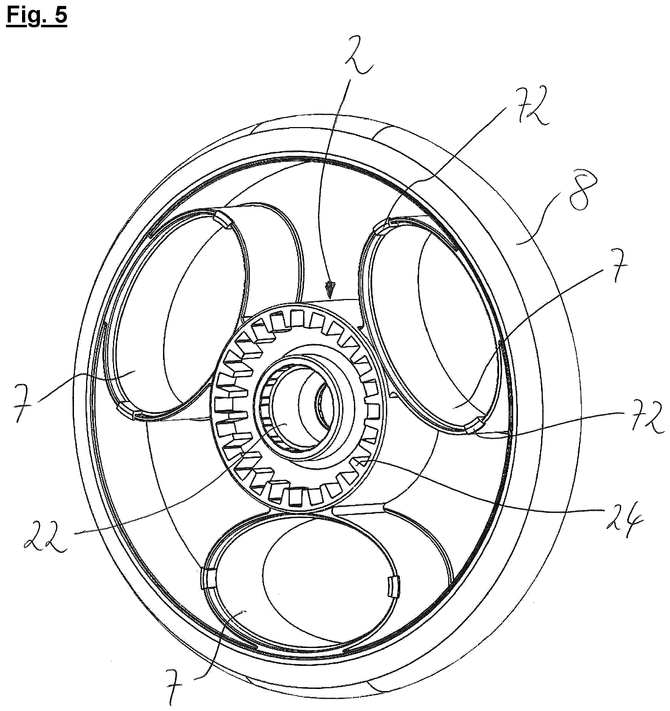

Figur 5 schließlich zeigt eine weitere bevorzugte Ausführungsform der Federung, wobei insbesondere die Eingriffsgeometrie 24 am Nabenabschnitt 2 sichtbar ist, welche als einstückig mit dem Material des Nabenabschnitts 2 ausgeführte Innenverzahnung ausgeführt ist. Durch die einstückige Ausbildung dieser Funktionsgeometrie an der Nabe kann das Rad für ein Kindertransportfahrzeug besonders günstig hergestellt werden. Weiterhin ist in jedem der Federabschnitte 6 ein Verstärkungselement 7 angeordnet, welches durch jeweils 2 Klammerelement 72 gehalten ist. Bevorzugt kann dabei das Verstärkungselement 7 parallel zur Rotationsachse R in die Federaussparung 62 eingeschoben werden und gelangt auf der in Figur 5 den Betrachter abgewandten Seite der Federaussparung 62 mit einem Anschlag in Eingriff. In dieser Stellung kann das Verstärkungselement 7 durch jeweils zumindest ein Klammerelement 72 gesichert werden.

**Bezugszeichen:**

| | |
|---|---|
| 2 - | Nabenabschnitt |
| 4 - | Randabschnitt |
| 5 - | Dämpfabschnitt |
| 6 - | Federabschnitt |
| 7 - | Verstärkungselement |
| 8 - | Reifen |
| 22 - | Lagerabschnitt |
| 24 - | Eingriffsgeometrie |
| 42 - | Außenfläche |
| 61 - | Federsteg |
| 62 - | Federaussparung |
| 72 - | Klammerelement |
| F - | Federebene |
| H - | Hauptachse |
| R - | Rotationsachse |
| W - | geringste Wanddicke |
| A - | Frontfläche |
| B - | hintere Stirnfläche |

## Patentansprüche

1. Federung, insbesondere eines Rades,
aufweisend einen Nabenabschnitt (2) und einen Randabschnitt (4), wobei der Nabenabschnitt (2) einen Lagerabschnitt (22) zur drehbaren Lagerung um eine Rotationsachse (R) an einer Achseinheit aufweist,
wobei der Randabschnitt (4) im Wesentlichen ringförmig um die Rotationsachse (R) ausgebildet ist und den Nabenabschnitt (2) umgibt,
wobei zwischen dem Nabenabschnitt (2) und dem Randabschnitt (4) zumindest zwei Federabschnitte (6) angeordnet sind, von denen jeder am Nabenabschnitt (2) und am Randabschnitt (4) angreift,
wobei die Federabschnitte (6) jeweils einen Federsteg (61) aus elastisch verformbarem Material aufweisen,
wobei der Federsteg (61) sich überwiegend nicht senkrecht zur Rotationsachse (R) erstreckt.

2. Federung nach Anspruch 1,
wobei die Federabschnitte (6) eine Federaussparung (62) aufweisen,
wobei der Federsteg (61) die Federaussparung (62) in einer orthogonal zur Rotationsachse (R) stehenden Federebene (F) vollständig umgibt.

3. Federung nach einem der Ansprüche 1 oder 2,
wobei der Federsteg (61) einstückig mit dem Material des Nabenabschnitts (2) und/oder mit dem Material des Randabschnitts (4) ausgebildet ist.

4. Federung nach Anspruch 1,
wobei zumindest einer der Federstege (61) mit dem Material des Nabenabschnitts (2) und/oder des Randabschnitts (4) stoffschlüssig verbunden ist und insbesondere bevorzugt angegossen ist.

5. Federung nach einem der vorhergehenden Ansprüche,
wobei die Federabschnitte (6) entlang ihrer Erstreckung parallel zur Rotationsachse einen im Wesentlichen gleichbleibenden Querschnitt aufweisen.

6. Federung nach einem der vorhergehenden Ansprüche,
wobei die Federabschnitte (6) eine ovale Form aufweisen,
wobei die in die Federebene (F) projizierte Fläche der Federabschnitte (6) jeweils elliptisch ist.

7. Federung nach Anspruch 6,
wobei die Hauptachse (H) der projizierten elliptischen Fläche eine Länge aufweist, die das 1,2- bis 3,5-fache, vorzugsweise das 1,5- bis 2,5-fache der Länge der Nebenachse beträgt.

8. Federung nach einem der vorhergehenden Ansprüche,
wobei die Länge der Hauptachse (H) ein 20- bis 100-faches, vorzugsweise ein 30- bis 70-faches und besonders bevorzugt ein 40- bis 60-faches der geringsten Wanddicke (W) des Federsteges (61) ist.

9. Federung nach einem der vorhergehenden Ansprüche,
aufweisend drei Federabschnitte (6) welche in einem unbelasteten Zustand der Federung gleichmäßig und mit gleichem Abstand voneinander um die Rotationsachse (R) verteilt angeordnet sind.

10. Federung nach einem der vorhergehenden Ansprüche,
aufweisend vier Federabschnitte (6) welche in einem unbelasteten Zustand der Federung gleichmäßig und mit gleichem Abstand voneinander um die Rotationsachse (R) verteilt angeordnet sind.

11. Federung nach einem der vorhergehenden Ansprüche,
wobei zumindest ein Verstärkungselement (7) vorgesehen ist, welches in einen Federabschnitt (6) einsetzbar ist und durch den Federsteg (61) formschlüssig gegen Verlagerung senkrecht zur Rotationsachse (R) gesichert ist.

12. Federung nach Anspruch 9,
wobei zumindest ein Klammerelement (72) vorgesehen ist, welches das Verstärkungselement (7) kraft- und/oder formschlüssig am Federsteg (61) hält.

13. Federung nach einem der vorhergehenden Ansprüche,
wobei der Nabenabschnitt (2) eine Eingriffsgeometrie (24) aufweist, welche zum Eingriff mit einem Antriebs- und/oder Bremssystem ausgelegt ist, wobei die Eingriffsgeometrie (24) einstückig mit dem Lagerabschnitt (22) am Nabenabschnitt (2) ausgebildet ist.

14. Federung nach einem der vorhergehenden Ansprüche,
wobei der Lagerabschnitt (22) eine einstückig mit dem Nabenabschnitt (2) ausgeführte Aufnahme für einen Außenring eines Wälz- oder Gleitlagers aufweist.

15. Federung nach einem der vorhergehenden Ansprüche,
wobei ein Reifen (8) auf einer radial außen liegenden Außenfläche (42) des Randabschnitts (4) mit dem Randabschnitt (4) verbunden ist,
wobei der Reifen (8) bevorzugt auf die Außenfläche aufgegossen, geklebt, oder gemeinsam mit dem Randabschnitt (4) in einem Zwei-Komponenten-Spritzgussverfahren hergestellt ist.
